(19) Europäisches Patentamt
European Patent Office
Office européen des brevets

(11) **EP 3 333 539 A1**

(12) **DEMANDE DE BREVET EUROPEEN**

(43) Date de publication:
**13.06.2018 Bulletin 2018/24**

(51) Int Cl.:
*G01C 5/06* *(2006.01)*       *G01C 21/00* *(2006.01)*
*G06T 7/20* *(2017.01)*       *G05D 1/06* *(2006.01)*
*G01C 21/16* *(2006.01)*

(21) Numéro de dépôt: **17205895.0**

(22) Date de dépôt: **07.12.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **09.12.2016 FR 1662264**

(71) Demandeur: **Parrot Drones**
**75010 Paris (FR)**

(72) Inventeurs:
• **RIMOUX, Ariel**
**75005 PARIS (FR)**
• **REMOND, Fabien**
**94240 L'HAY LES ROSES (FR)**
• **NIQUIN, Cédric**
**92150 SURESNES (FR)**

(74) Mandataire: **Lavoix**
**2, place d'Estienne d'Orves**
**75441 Paris Cedex 09 (FR)**

(54) **DISPOSITIF ÉLECTRONIQUE DE PILOTAGE D'UN DRONE, DRONE, PROCÉDÉ DE PILOTAGE ET PROGRAMME D'ORDINATEUR ASSOCIÉS**

(57) Ce dispositif électronique (16) de pilotage d'un drone (10) comprend :
- un premier module d'acquisition (40) configuré pour acquérir une succession d'images d'un terrain (14) survolé par le drone, prises par un capteur d'images (12 ; 18) équipant le drone,
- un deuxième module d'acquisition (44) configuré pour acquérir une vitesse sol mesurée, fournie par un dispositif de mesure (24) équipant le drone, et
- un module de calcul (46) configuré pour calculer une altitude du drone par rapport au terrain (14), à partir de la vitesse sol mesurée acquise et d'un algorithme à flot optique appliqué aux images acquises.

Le deuxième module d'acquisition est configuré pour acquérir en outre une altitude du drone mesurée par rapport à un niveau de référence, et le dispositif comprend un module de recalibrage (48) configuré pour corréler l'altitude calculée par rapport au terrain avec l'altitude mesurée par rapport au niveau de référence.

FIG.1

EP 3 333 539 A1

**Description**

La présente invention concerne un dispositif électronique de pilotage d'un drone. Le dispositif électronique comprend un premier module d'acquisition configuré pour acquérir une succession d'images d'un terrain survolé par le drone, prises par un capteur d'images équipant le drone, et un deuxième module d'acquisition configuré pour acquérir une vitesse sol mesurée, fournie par un dispositif de mesure équipant le drone.

Le dispositif électronique comprend en outre un module de calcul configuré pour calculer une altitude du drone par rapport au terrain, à partir d'un algorithme à flot optique appliqué aux images acquises et de la vitesse sol mesurée acquise.

L'invention concerne également un drone comprenant un capteur d'images et un tel dispositif électronique de pilotage.

L'invention concerne également un procédé de pilotage du drone.

L'invention concerne également un programme d'ordinateur comportant des instructions logicielles qui, lorsqu'elles sont exécutées par un ordinateur, mettent en oeuvre un tel procédé de pilotage.

L'invention concerne le domaine des drones, c'est-à-dire des appareils motorisés volants pilotés à distance. L'invention s'applique notamment aux drones à voilure fixe, tout en s'appliquant également à d'autres types de drones, par exemple aux drones à voilure tournante, tels que les quadricoptères.

On connait, de l'article « *Determining Altitude AGL Using Optical Flow* » de Jonathan Price, un drone comportant un dispositif de pilotage du type précité. Le drone est un drone à voilure fixe, pilotable à l'aide d'un dispositif électronique portable, tel qu'un ordiphone (de l'anglais *smartphone*) ou une tablette électronique.

Le dispositif électronique est configuré pour acquérir une succession d'images d'un terrain survolé par le drone, prises par un capteur d'images équipant le drone, et aussi une vitesse sol mesurée, fournie par un dispositif de mesure équipant le drone, tel qu'un système de positionnement par satellite, également appelé système GPS (de l'anglais *Global Positionning System*).

Le dispositif de pilotage est configuré pour calculer une altitude du drone par rapport au terrain, à partir d'un algorithme à flot optique appliqué aux images acquises et de la vitesse sol mesurée acquise.

L'altitude ainsi calculée vérifie l'équation suivante :

$$\text{Altitude} = \text{Vsol}_{mes} / (\text{Flot optique} - \text{Taux de tangage})$$

où $\text{Vsol}_{mes}$ représente la vitesse sol mesurée fournie par le dispositif de mesure, tel que le système GPS,
Flot optique représente le flot optique calculé par le module d'estimation, et
Taux de tangage représente un taux de tangage du drone, fourni par un gyroscope équipant le drone.

Toutefois, l'altitude ainsi calculée n'est pas toujours très fiable, et le pilotage du drone s'en ressent alors.

Le but de l'invention est alors de proposer un dispositif électronique de pilotage calculant de manière plus fiable l'altitude du drone par rapport au terrain survolé, et permettant alors de réduire d'éventuels à-coups lors du pilotage du drone, notamment en phase d'atterrissage.

A cet effet, l'invention a pour objet un dispositif électronique de pilotage du type précité, dans lequel le deuxième module d'acquisition est configuré pour acquérir en outre une altitude du drone mesurée par rapport à un niveau de référence, et le dispositif comprend en outre un module de recalibrage configuré pour corréler l'altitude calculée par rapport au terrain avec l'altitude mesurée par rapport au niveau de référence.

Le dispositif électronique de pilotage selon l'invention permet alors de recalibrer l'altitude du drone calculée par rapport au terrain, en effectuant une corrélation entre l'altitude calculée par rapport au terrain et l'altitude mesurée par rapport au niveau de référence. Le niveau de référence est par exemple le niveau de la mer, et l'altitude mesurée par rapport au niveau de la mer est par exemple obtenue via un capteur de pression.

La vitesse sol mesurée est par exemple fournie par un dispositif de positionnement par satellite, également appelé dispositif GNSS (de l'anglais *Global Navigation Satellite System*), tel qu'un récepteur GPS (de l'anglais *Global Positionning System*), et/ou par un capteur inertiel.

L'altitude par rapport au terrain, ainsi calculée et recalibrée, est alors plus fiable, et est particulièrement utile, notamment en phase d'atterrissage, afin de mieux prévoir l'approche du sol et d'anticiper l'instant où le dispositif de pilotage devra commander un cabrage du drone, c'est-à-dire une augmentation de son assiette, en vue du toucher.

Suivant d'autres aspects avantageux de l'invention, le dispositif électronique de pilotage comprend une ou plusieurs des caractéristiques suivantes, prises isolément ou suivant toutes les combinaisons techniquement possibles :

- le module de recalibrage est configuré en outre pour estimer une altitude courante par rapport au terrain à partir d'une altitude courante mesurée par rapport au niveau de référence et d'une précédente altitude calculée par rapport au terrain qui a été corrélée avec une précédente altitude mesurée par rapport au niveau de référence, de préférence en cas d'une défaillance au moins temporaire du calcul de l'altitude par rapport au terrain à partir de l'algorithme à flot optique ;

- le premier module d'acquisition est en outre configuré pour calculer un premier indicateur en fonction d'un gradient d'image, le module de calcul étant configuré pour calculer l'altitude du drone par rapport au terrain seulement lorsque la valeur du premier indicateur est supérieure à un premier seuil ;
- le module de recalibrage configuré en outre pour calculer un deuxième indicateur inversement proportionnel au premier indicateur et pour corréler l'altitude calculée par rapport au terrain avec l'altitude mesurée par rapport au niveau de référence seulement lorsque la valeur du deuxième indicateur est inférieure à un deuxième seuil ;
- le niveau de référence est le niveau de la mer, et l'altitude mesurée par rapport au niveau de la mer est obtenue via un capteur de pression ;
- le deuxième module d'acquisition est configuré pour acquérir en outre une altitude du drone mesurée par rapport au terrain, et le dispositif comprend en outre un module de commande configuré pour commander une attitude du drone en fonction d'une altitude du drone, le module de commande étant configuré pour calculer des instructions de pilotage correspondant à ladite attitude ;
- lorsque la valeur de l'altitude mesurée par rapport au terrain est supérieure à une première altitude seuil prédéfinie, le module de commande est configuré pour commander l'attitude du drone en fonction de l'altitude mesurée par rapport au terrain, acquise par le deuxième module d'acquisition, et lorsque la valeur de l'altitude mesurée par rapport au terrain est inférieure à la première altitude seuil prédéfinie, le module de commande est configuré pour commander l'attitude du drone en fonction en outre de l'altitude par rapport au terrain calculée par le module de calcul ;
- lorsque la valeur de l'altitude mesurée par rapport au terrain est inférieure à une deuxième altitude seuil prédéfinie, le module de commande est configuré pour commander l'assiette du drone à une valeur supérieure à une assiette minimale d'atterrissage prédéfinie.

L'invention a également pour objet un drone comprenant un capteur d'images configuré pour prendre une succession d'images d'un terrain survolé par le drone et un dispositif électronique de pilotage, dans lequel le dispositif électronique de pilotage est tel que défini ci-dessus.

L'invention a également pour objet un procédé de pilotage d'un drone comportant un capteur d'images, le procédé étant mis en oeuvre par un dispositif électronique et comprenant :

- l'acquisition d'une succession d'images, prises par le capteur d'images, d'un terrain survolé par le drone,
- l'acquisition d'une vitesse sol mesurée, fournie par un dispositif de mesure équipant le drone, et
- le calcul d'une altitude du drone par rapport au terrain, à partir de la vitesse sol mesurée acquise et d'un algorithme à flot optique appliqué aux images acquises,
- l'acquisition d'une altitude du drone mesurée par rapport à un niveau de référence, et
- la corrélation de l'altitude calculée par rapport au terrain avec l'altitude mesurée par rapport au niveau de référence.

L'invention a également pour objet un programme d'ordinateur comportant des instructions logicielles qui, lorsqu'elles sont exécutées par un ordinateur, mettent en oeuvre un procédé tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un drone comportant un dispositif électronique de pilotage selon l'invention ; et
- la figure 2 est un organigramme d'un procédé de pilotage selon l'invention.

Dans la suite de la description, l'expression « sensiblement constant(e) » s'entend comme une identité à plus ou moins 10%, c'est-à-dire avec une variation d'au plus 10%, de préférence encore comme une identité à plus ou moins 5%, c'est-à-dire avec une variation d'au plus 5%.

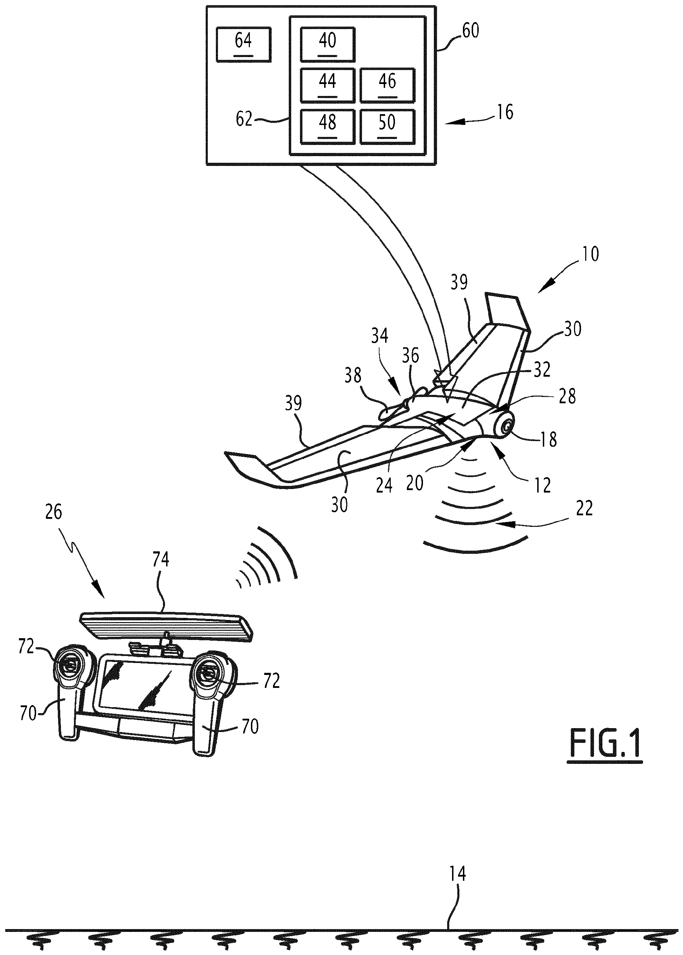

Sur la figure 1, un drone 10, c'est-à-dire un aéronef sans pilote à bord, comprend un premier capteur d'images 12 configuré pour prendre une succession d'images d'un terrain 14 survolé par le drone 10 et un dispositif électronique de pilotage 16 configuré pour piloter le drone.

Le drone 10 comprend un deuxième capteur d'images 18 configuré pour prendre des images d'une scène vers laquelle se dirige le drone 10, le deuxième capteur d'images 18 étant par exemple une caméra à visée frontale.

Le drone 10 comprend également un altimètre 20, tel qu'un radioaltimètre ou un télémètre à ultrasons, émettant en direction du sol un faisceau 22 permettant de mesurer l'altitude du drone 10 par rapport au terrain 14, c'est-à-dire par rapport au sol.

Le drone 10 comprend également un dispositif de mesure 24 apte à mesurer une vitesse sol $V_{sol\_mes}$ du drone 10. Le dispositif de mesure 24 est, par exemple, un dispositif de positionnement par satellite, également appelé dispositif GNSS (de l'anglais *Global Navigation Satellite System*), ou encore une centrale inertielle, également appelée IMU (de l'anglais *Inertial Measurement Unit*) comportant des accéléromètres et/ou des gyromètres, permettant de mesurer des vitesses angulaires et des angles d'attitude du drone 10.

En complément facultatif, le drone 10 comprend un capteur de pression, non représenté, aussi appelé capteur barométrique, configuré pour déterminer des variations d'altitude du drone 10, telles que des variations instantanées et/ou des variations par rapport à un niveau de référence, c'est-à-dire par rapport à une altitude initiale prédéfinie. Le niveau de référence est, par exemple le niveau de la mer, et le capteur de pression est alors apte à fournir une altitude mesurée du drone 10 par rapport au niveau de la mer.

En complément facultatif, le drone 10 comprend un capteur, non représenté, de mesure de la vitesse air du drone, ce capteur de mesure étant relié à une prise de pression dynamique d'un élément de type sonde de Pitot. En complément facultatif, le drone 10 comprend un capteur magnétométrique, non représenté, donnant l'orientation du drone par rapport au nord géographique.

Le drone 10 est un engin volant motorisé pilotable à distance, notamment via une manette 26.

Le drone 10 comporte un module de transmission 28 configuré pour échanger des données, de préférence par ondes radioélectriques, avec un ou plusieurs équipements électroniques, notamment avec la manette 26, voire avec d'autres éléments électroniques pour la transmission de la ou des images acquises par les capteurs d'image 12, 18.

Dans l'exemple de la figure 1, le drone 10 est un drone à voilure fixe, de type aile volante. Il comprend deux ailes 30 et un fuselage 32 muni en partie arrière d'un système de propulsion 34 comportant un moteur 36 et une hélice 38. Chaque aile 30 est munie du côté du bord de fuite d'au moins une gouverne 39 orientable via un servomécanisme, non représenté, pour piloter la trajectoire du drone 10.

En variante, non représentée, le drone 10 est un drone à voilure tournante, comportant au moins un rotor, et de préférence une pluralité de rotors, le drone 10 étant alors appelé drone multirotor. Le nombre de rotors est par exemple égal à 4, et le drone 10 est alors un drone quadrirotor.

Le premier capteur d'images 12 est connu en soi, et est par exemple une caméra à visée verticale pointant vers le bas.

Le terrain 14 s'entend au sens général du terme, comme une portion de la surface de la Terre lorsqu'il s'agit un terrain extérieur, qu'il s'agisse d'une surface terrestre, ou d'une surface maritime, ou encore d'une surface comportant à la fois une portion terrestre et une portion maritime. En variante, le terrain 14 est un terrain intérieur disposé à l'intérieur d'un bâtiment. Le terrain 14 est également appelé sol.

Le dispositif électronique de pilotage 16 comprend un premier module d'acquisition 40 configuré pour acquérir une succession d'images d'un terrain survolé par le drone 10, prises par un capteur d'images équipant le drone 10, tel que le premier capteur d'images 12, voire tel que le deuxième capteur d'images 18, étant entendu que les images préférentiellement utilisées pour l'application de l'algorithme à flot optique aux images acquises sont celles fournies par le premier capteur d'images 12.

Le dispositif électronique de pilotage 16 comprend un deuxième module d'acquisition 44 configuré pour acquérir la vitesse sol mesurée $V_{sol\_mes}$, fournie par le dispositif de mesure 24 équipant le drone 10. Le deuxième module d'acquisition 44 est configuré en outre pour acquérir en outre une altitude $Z_{ref\_mes}$ du drone 10 mesurée par rapport à un niveau de référence. En complément facultatif, le deuxième module d'acquisition 44 est configuré pour acquérir en outre une altitude $Z_{sol\_mes}$ du drone 10 mesurée par rapport au terrain 14, c'est-à-dire par rapport au sol.

Le dispositif électronique de pilotage 16 comprend un module de calcul 46 configuré pour calculer une altitude $Z_{sol\_est}$ du drone 10 par rapport au terrain 14, à partir de la vitesse sol mesurée $V_{sol\_mes}$ acquise et d'un algorithme à flot optique appliqué aux images acquises.

Selon l'invention, le dispositif électronique de pilotage 16 comprend en outre un module de recalibrage 48 configuré pour effectuer une corrélation entre l'altitude calculée par rapport au terrain $Z_{sol\_est}$ et l'altitude mesurée par rapport au niveau de référence $Z_{ref\_mes}$.

En complément facultatif, le dispositif électronique de pilotage 16 comprend en outre un module de commande 50 configuré pour commander une attitude du drone 10 en fonction d'une altitude du drone 10, le module de commande 50 étant configuré pour calculer des instructions de pilotage correspondant à ladite attitude.

Dans l'exemple de la figure 1, le dispositif électronique de pilotage 16 comprend une unité de traitement d'informations 60, formée par exemple d'une mémoire 62 et d'un processeur 64 associé à la mémoire 62.

La manette 26 est connue en soi, et permet de piloter le drone 10. Dans l'exemple de la figure 1, la manette 26 comprend deux poignées de préhension 70, chacune étant destinée à être saisie par une main respective du pilote, une pluralité d'organes de commande, dont deux manches à balai 72 (de l'anglais *joystick*), chacun étant disposé à proximité d'une poignée de préhension 70 respective et étant destiné à être actionné par le pilote, de préférence par un pouce respectif. En variante, non représentée, la manette 26 est mise en oeuvre via un ordiphone ou une tablette électronique, comme connu en soi.

La manette 26 comprend également une antenne radioélectrique 74 et un émetteur-récepteur radioélectrique, non représenté, pour l'échange de données par ondes radioélectriques avec le drone 10, à la fois en liaison montante et en liaison descendante.

Dans l'exemple de la figure 1, le premier module d'acquisition 40, le deuxième module d'acquisition 44, le module de calcul 46 et le module de recalibrage 48, ainsi qu'en complément facultatif le module de commande 50, sont réalisés chacun sous forme d'un logiciel exécutable par le processeur 64. La mémoire 62 de l'unité de traitement d'informations 60 est alors apte à stocker un premier logiciel d'acquisition configuré pour acquérir une succession d'images d'un terrain survolé par le drone 10, prises par un capteur d'images, tel que le premier capteur d'images 12. La mémoire 62 de l'unité de traitement d'informations 60 est apte à stocker un deuxième logiciel d'acquisition configuré pour acquérir la vitesse sol mesurée $V_{sol\_mes}$, fournie par le dispositif de mesure 24 équipant le drone 10, et pour acquérir en outre l'altitude $Z_{ref\_mes}$ du drone 10 mesurée par rapport au niveau de référence. La mémoire 62 de l'unité de traitement d'informations 60 est apte à stocker un logiciel de calcul configuré pour calculer l'altitude $Z_{sol\_est}$ du drone 10 par rapport au terrain 14, à partir de l'algorithme à flot optique appliqué aux images acquises et de la vitesse sol mesurée $V_{sol\_mes}$ acquise, et un logiciel de recalibrage configuré pour corréler l'altitude calculée par rapport au terrain $Z_{sol\_est}$ avec l'altitude mesurée par rapport au niveau de référence $Z_{ref\_mes}$. En complément facultatif, la mémoire 62 de l'unité de traitement d'informations 60 est apte à stocker un logiciel de commande configuré pour commander l'attitude du drone 10 en fonction de l'altitude du drone 10, le logiciel de commande étant configuré pour calculer des instructions de pilotage correspondant à ladite attitude. Le processeur 64 de l'unité de traitement d'informations 60 est alors apte à exécuter le premier logiciel d'acquisition, le deuxième logiciel d'acquisition, le logiciel de calcul et le logiciel de recalibrage, ainsi qu'en complément facultatif le logiciel de commande.

En variante non représentée, le premier module d'acquisition 40, le deuxième module d'acquisition 44, le module de calcul 46 et le module de recalibrage 48, ainsi qu'en complément facultatif le module de commande 50, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit).*

Le premier module d'acquisition 40 est en outre configuré pour calculer un premier indicateur Ind1 en fonction d'un gradient de chaque image acquise, et le module de calcul 46 est alors en outre configuré pour calculer, seulement lorsque la valeur du premier indicateur Ind1 est supérieure à un premier seuil S1, l'altitude $Z_{sol\_est}$ du drone 10 par rapport au terrain 14, par application de l'algorithme à flot optique aux images acquises.

Le premier module d'acquisition 40 est par exemple configuré pour calculer, pour chaque pixel, un gradient de valeur d'intensité entre la valeur d'intensité du pixel considéré et celles des pixels voisins, la valeur d'intensité de chaque pixel étant par exemple exprimée en niveau de gris, par exemple sur 8 bits avec des valeurs alors comprises entre 0 et 255.

Le premier indicateur Ind1 est alors par exemple le nombre de pixels de l'image pour lesquels le gradient calculé est supérieur à un gradient minimal prédéfini. Le premier seuil S1 est alors, par exemple, égal à 4, et l'image est alors considérée comme suffisamment bonne pour l'application de l'algorithme à flot optique à partir du moment où la valeur du gradient est, pour au moins 4 pixels de ladite image, supérieure ou égale au gradient minimal prédéfini.

Le module de calcul 46 est configuré pour calculer l'altitude $Z_{sol\_est}$ du drone 10 par rapport au terrain 14, à partir de l'algorithme à flot optique appliqué aux images acquises et de la vitesse sol mesurée $V_{sol\_mes}$ acquise par le deuxième module d'acquisition 44.

L'algorithme à flot optique est connu en soi, et est généralement utilisé pour estimer une vitesse sol à partir d'une altitude prédéfinie du drone par rapport au terrain, cette altitude prédéfinie étant supposée sensiblement constante.

L'algorithme à flot optique permet d'estimer un mouvement différentiel d'une scène d'une image à l'image suivante, et il existe différentes méthodes connues de mise en oeuvre de l'algorithme à flot optique, telles que par exemple la méthode de Lucas-Kanade, la méthode de Horn-Schunk, ou encore la méthode de Farneback. L'algorithme à flot optique est en outre susceptible d'être mis en oeuvre dans une technique dite de multi-résolution, adaptée pour estimer le flot optique avec différentes résolutions d'image successives, en partant d'une faible résolution jusqu'à une résolution élevée.

L'algorithme à flot optique est également susceptible d'être combiné avec un autre algorithme de traitement d'images, en particulier avec un algorithme de type détecteur de coins, afin d'améliorer l'estimation du mouvement différentiel de la scène d'une image à la suivante, comme décrit dans le document EP 2 400 460 A1. D'autres exemples de mise en oeuvre d'un algorithme à flot optique sont également décrits dans les documents « Optic-Flow Based Control of a 46g Quadrotor » de Briod et al, « Optical Flow Based Velocity Estimation for Vision based Navigation of Aircraft » de Julin et al, et « Distance and velocity estimation using optical flow from a monocular camera » de Ho et al.

Le module de calcul 46 est configuré pour mettre en oeuvre cet algorithme à flot optique, de manière inverse, en supposant la vitesse sol connue et en cherchant alors à calculer la valeur de l'altitude $Z_{sol\_est}$ du drone 10 par rapport au terrain 14. Le module de calcul 46 est en particulier configuré pour utiliser à cet effet, comme valeur prédéfinie de la vitesse sol, la valeur de la vitesse sol mesurée $V_{sol\_mes}$, acquise par le deuxième module d'acquisition 44.

Le module de recalibrage 48 est configuré pour corréler l'altitude calculée par rapport au terrain $Z_{sol\_est}$ et l'altitude mesurée par rapport au niveau de référence $Z_{ref\_mes}$, afin d'avoir une valeur plus fiable de l'altitude du drone 10 par rapport au terrain 14.

En complément facultatif, le module de recalibrage 48 est configuré notamment pour estimer une altitude courante $Z_{sol\_est}(N)$ par rapport au terrain 14 à partir d'une altitude courante $Z_{ref\_mes}(N)$ mesurée par rapport au niveau de référence et d'une précédente altitude $Z_{sol\_est}(N-1)$ calculée par rapport au terrain qui a été corrélée avec une précédente altitude $Z_{ref\_mes}(N-1)$ mesurée par rapport au niveau de référence.

L'homme du métier comprendra que N est un indice entier de valeur supérieure ou égale à 1, désignant la valeur courante de la grandeur considérée, et l'indice N-1 désigne alors la valeur précédente de la grandeur considérée correspondant à la dernière corrélation effectuée, l'indice 0 désignant une valeur initiale de la grandeur considérée.

Le module de recalibrage 48 est de préférence configuré pour estimer ainsi l'altitude courante par rapport au terrain $Z_{sol\_est}(N)$ à partir de l'altitude courante mesurée par rapport au niveau de référence $Z_{ref\_mes}(N)$ et de la précédente altitude calculée par rapport au terrain $Z_{sol\_est}(N-1)$ qui a été corrélée avec la précédente altitude mesurée par rapport au niveau de référence $Z_{ref\_mes}(N-1)$ en cas d'une défaillance au moins temporaire du calcul, à partir de l'algorithme à flot optique, de l'altitude par rapport au terrain.

En complément facultatif, le module de recalibrage 48 est configuré en outre pour calculer un deuxième indicateur Ind2 inversement proportionnel au premier indicateur Ind1 et pour corréler l'altitude calculée par rapport au terrain $Z_{sol\_est}$ avec l'altitude mesurée par rapport au niveau de référence $Z_{ref\_mes}$ seulement lorsque la valeur du deuxième indicateur Ind2 est inférieure à un deuxième seuil S2. La valeur du deuxième seuil S2 est plus restrictive que la valeur du premier seuil S1.

Le module de commande 50 est configuré pour commander l'attitude du drone 10. Lorsque l'altitude mesurée par rapport au terrain $Z_{sol\_mes}$ est supérieure à une première altitude seuil prédéfinie Z1, le module de commande 50 est configuré pour commander l'attitude du drone 10 en fonction de l'altitude mesurée par rapport au terrain $Z_{sol\_mes}$, acquise par le deuxième module d'acquisition 44, et de préférence seulement en fonction de cette altitude $Z_{sol\_mes}$ parmi les différentes altitudes précitées. La première altitude seuil prédéfinie Z1 est par exemple sensiblement égale à 15 m.

Lorsque la valeur de l'altitude mesurée par rapport au terrain $Z_{sol\_mes}$ est inférieure à la première altitude seuil prédéfinie Z1, le module de commande 50 est configuré pour commander l'attitude du drone 10 en fonction en outre de l'altitude par rapport au terrain $Z_{sol\_est}$, calculée par le module de calcul 46. Autrement dit, lorsque la valeur de l'altitude mesurée par rapport au terrain $Z_{sol\_mes}$ est inférieure à la première altitude seuil prédéfinie Z1, le module de commande 50 est configuré pour commander l'attitude du drone 10 en fonction de l'altitude mesurée par rapport au terrain $Z_{sol\_mes}$ et de l'altitude calculée par rapport au terrain $Z_{sol\_est}$, l'altitude calculée étant de préférence l'altitude recalibrée fournie en sortie du module de recalibrage 48.

Lorsque la valeur de l'altitude mesurée par rapport au terrain $Z_{sol\_mes}$ est inférieure à une deuxième altitude seuil prédéfinie Z2, le module de commande 50 est configuré pour commander l'assiette du drone 10 à une valeur supérieure à une assiette minimale d'atterrissage prédéfinie. La deuxième altitude seuil prédéfinie Z2 est par exemple sensiblement égale à 1,2 m.

Autrement dit, lorsque la valeur de l'altitude mesurée par rapport au terrain $Z_{sol\_mes}$ est inférieure à cette deuxième altitude seuil prédéfinie Z2 qui correspond à une altitude proche du sol, le module de commande 50 est configuré pour faire effectuer au drone 10 un cabrage d'urgence, dans le cas où la proximité du sol n'aurait pas été préalablement détectée et où la valeur de l'assiette du drone 10 ne serait pas déjà supérieure à l'assiette minimale d'atterrissage prédéfinie.

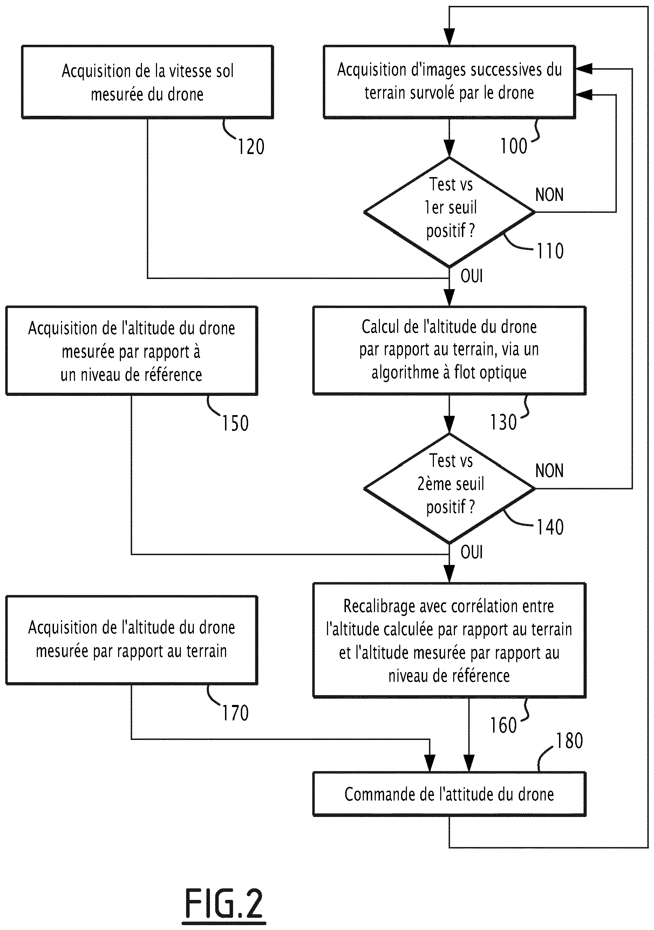

Le fonctionnement du drone 10 est en particulier du dispositif électronique de pilotage 16 selon l'invention va désormais être expliqué à l'aide de la figure 2 représentant un organigramme du procédé de détermination selon l'invention.

Lors d'une étape initiale 100, différentes images successives du terrain 14 survolé par le drone 10 sont acquises par le premier module d'acquisition 40, de préférence à partir du premier capteur d'images 12, tel qu'une caméra à visée verticale pointant vers le bas.

En complément facultatif, le premier module d'acquisition 44 calcule le premier indicateur Ind1 relatif à ces différentes images acquises, qui est un indicateur de qualité des images acquises. Le dispositif de pilotage 16 teste alors, lors de l'étape suivante 110, la valeur du premier indicateur Ind1 par rapport au premier seuil S1, c'est-à-dire compare la valeur du premier indicateur Ind1 avec celle du premier seuil S1.

En parallèle, lors de l'étape 120, une valeur de la vitesse sol mesurée $V_{sol\_mes}$ est acquise par le deuxième module d'acquisition 44 de la part du dispositif de mesure 24, ce dispositif de mesure 24 étant par exemple un dispositif de positionnement par satellite, également appelé dispositif GNSS, tel qu'un récepteur GPS ou un récepteur GLONASS, ou encore une centrale inertielle, également appelée IMU.

Si, lors de l'étape 110, le test vis-à-vis du premier seuil S1 est positif, c'est-à-dire si la valeur du premier indicateur Ind1 est supérieure ou égale au premier seuil S1, alors le dispositif de pilotage 16 passe à l'étape 130 lors de laquelle le module de calcul 46 calcule l'altitude $Z_{sol\_est}$ du drone 10 par rapport au terrain 14, par application aux images acquises de l'algorithme à flot optique, et à partir de la valeur de la vitesse sol mesurée $V_{sol\_mes}$.

Sinon, si le test effectué lors de l'étape 110 est négatif, c'est-à-dire si la valeur du premier indicateur Ind1 est inférieure au premier seuil S1, alors le dispositif de pilotage 16 retourne à l'étape 100 pour acquérir de nouvelles images du terrain 14 survolé par le drone 10.

L'algorithme à flot optique utilisé par de l'étape 130 est, par exemple, un algorithme à flot optique utilisant la méthode de Lucas-Kanade.

Lors de l'étape suivante 140, le module de calcul 46 calcule le deuxième indicateur Ind2 qui est inversement proportionnel au premier indicateur Ind1, et teste ce deuxième indicateur Ind2 vis-à-vis du deuxième seuil S2, c'est-à-dire compare ce deuxième indicateur Ind2 avec le deuxième seuil S2.

En parallèle, lors de l'étape 150, une valeur de l'altitude mesurée par rapport au niveau de référence $Z_{ref\_mes}$ est acquise par le deuxième module d'acquisition 44, par exemple de la part du capteur de pression, le niveau de référence étant par exemple le niveau de la mer.

Si, lors de l'étape 140, le test vis-à-vis du deuxième seuil S2 est positif, c'est-à-dire si la valeur du deuxième indicateur Ind2 est inférieure ou égale au deuxième seuil S2, alors le module de calcul 46 transmet au module de recalibrage 48 la valeur de l'altitude calculée du drone par rapport au terrain $Z_{sol\_est}$, et le dispositif de pilotage 16 passe à l'étape 160 lors de laquelle le module de recalibrage 48 corrèle l'altitude calculée par rapport au terrain $Z_{sol\_est}$ avec l'altitude mesurée par rapport au niveau de référence $Z_{ref\_mes}$.

Sinon, si le test effectué lors de l'étape 140 est négatif, c'est-à-dire si la valeur du deuxième indicateur Ind2 est supérieure au deuxième seuil S2, alors le dispositif de pilotage 16 retourne à l'étape 100 pour acquérir de nouvelles images du terrain 14 survolé par le drone 10.

Lors de l'étape 160, le module de recalibrage 48 estime notamment l'altitude courante $Z_{sol\_est}(N)$ par rapport au terrain 14 à partir de l'altitude courante $Z_{ref\_mes}(N)$ mesurée par rapport au niveau de référence et de la précédente altitude $Z_{sol\_est}(N-1)$ calculée par rapport au terrain qui a été corrélée avec la précédente altitude $Z_{ref\_mes}(N-1)$ mesurée par rapport au niveau de référence. Ceci est en particulier utile en cas de défaillance au moins temporaire du calcul de l'altitude par rapport au terrain $Z_{sol\_est}$ à partir de l'algorithme à flot optique, c'est-à-dire dans le cas où l'un des deux tests vis-à-vis des premier et deuxième seuils S1, S2, décrits précédemment, serait négatif.

En parallèle, lors de l'étape 170, une valeur de l'altitude mesurée par rapport au terrain $Z_{sol\_mes}$ est acquise par le deuxième module d'acquisition 44 de la part de l'altimètre 20, tel qu'un radioaltimètre ou un télémètre à ultrasons.

Le dispositif de pilotage 16 passe ensuite à l'étape 180 lors de laquelle le module de commande 50 commande l'attitude du drone 10, notamment en fonction de l'altitude du drone 10 par rapport au terrain 14. Le module de commande 50 calcule alors des instructions de pilotage correspondant à ladite attitude, en fonction de ladite altitude du drone par rapport au terrain 14, ces instructions de pilotage étant notamment destinées aux servomécanismes orientant les gouvernes 39.

A cet effet, le module de commande 50 est susceptible d'utiliser la valeur de l'altitude par rapport au terrain $Z_{sol\_est}$ calculée par le module de calcul 46, et de préférence l'altitude recalibrée fournie en sortie du module de recalibrage 48, et/ou la valeur de l'altitude mesurée par rapport au terrain $Z_{sol\_mes}$ acquise par le deuxième module d'acquisition 44, comme représenté sur la figure 2.

Plus précisément, lorsque l'altitude mesurée par rapport au terrain $Z_{sol\_mes}$ est supérieure à la première altitude seuil prédéfinie Z1, le module de commande 50 commande, lors de l'étape 180, l'attitude du drone 10 en fonction de l'altitude mesurée par rapport au terrain $Z_{sol\_mes}$, et de préférence seulement en fonction de cette altitude mesurée par rapport au terrain $Z_{sol\_mes}$ parmi les différentes altitudes, mesurées ou calculées, pour le drone 10.

Lors de l'étape 180, lorsque la valeur de l'altitude mesurée par rapport au terrain $Z_{sol\_mes}$ est inférieure à la première altitude seuil prédéfinie Z1, c'est-à-dire lorsque le drone 10 est susceptible d'amorcer prochainement sa phase d'atterrissage, ou encore lorsque le drone 10 a reçu une instruction d'atterrissage, par exemple de la part de la manette 26, le module de commande 50 commande l'attitude du drone 10 en fonction de l'altitude mesurée par rapport au terrain $Z_{sol\_mes}$ et de l'altitude calculée par rapport au terrain $Z_{sol\_est}$, l'altitude calculée étant de préférence l'altitude recalibrée fournie en sortie du module de recalibrage 48.

En complément facultatif, lorsque la valeur de l'altitude mesurée par rapport au terrain $Z_{sol\_mes}$ est inférieure à la deuxième altitude seuil prédéfinie Z2, le module de commande 50 commande, lors de l'étape 180, l'assiette du drone 10 avec une assiette minimale d'atterrissage prédéfinie, afin d'effectuer un calibrage d'urgence au cas où le cabrage du drone 10 n'aurait pas été préalablement commandé.

A l'issue de l'étape 180, le dispositif de pilotage 16 retourne à l'étape 100 pour acquérir de nouvelles images du terrain 14 survolé par le drone 10.

Le dispositif électronique de pilotage 16 selon l'invention permet alors de recalibrer l'altitude du drone calculée par rapport au terrain $Z_{sol\_est}$, en effectuant une corrélation entre cette altitude calculée par rapport au terrain $Z_{sol\_est}$ et l'altitude mesurée par rapport au niveau de référence $Z_{sol\_mes}$, ce qui permet d'avoir une valeur plus fiable de l'altitude du drone 10 par rapport au terrain 14.

Ceci est notamment efficace en cas de défaillance au moins temporaire du calcul, à partir de l'algorithme à flot optique, de l'altitude par rapport au terrain, et la comparaison des premier deuxième indicateurs Ind1, Ind2 avec respectivement les premier et deuxième seuils S1, S2 permet alors de détecter efficacement une telle défaillance du calcul de l'altitude à partir de l'algorithme à flot optique.

Une telle défaillance est par exemple susceptible de se produire lorsque le terrain 14 survolé par le drone 10 engendre une scène variant faiblement d'une image à l'autre, ce qui génère alors une incertitude de calcul relativement élevée, lors de l'application de l'algorithme à flot optique aux images acquises.

L'altitude par rapport au terrain, ainsi calculée et recalibrée, est alors plus fiable, et est particulièrement utile en phase d'atterrissage, afin de mieux prévoir l'approche du sol et d'anticiper l'instant temporel où le dispositif de pilotage 16 devra commander un cabrage du drone 10 en vue du toucher du sol.

Le fait de forcer si besoin l'assiette du drone 10 avec une assiette minimale d'atterrissage prédéfinie, lorsque la valeur de l'altitude mesurée par l'altimètre 20 est inférieure à la deuxième altitude seuil prédéfinie Z2, permet d'offrir en outre une procédure de correctif d'urgence en vue de l'atterrissage du drone 10, notamment dans l'hypothèse où l'altitude recalibrée fournie en sortie du module de recalibrage 48 serait momentanément perturbée.

On conçoit alors que le dispositif électronique de pilotage 16 et le procédé de pilotage selon l'invention permettent de calculer de manière plus fiable l'altitude du drone 10 par rapport au terrain survolé, et alors de réduire d'éventuels à-coups lors du pilotage du drone 10, notamment en phase d'atterrissage.

**Revendications**

1. Dispositif électronique (16) de pilotage d'un drone (10), le dispositif (16) comprenant :

   - un premier module d'acquisition (40) configuré pour acquérir une succession d'images d'un terrain (14) survolé par le drone (10), prises par un capteur d'images (12 ; 18) équipant le drone (10),
   - un deuxième module d'acquisition (44) configuré pour acquérir une vitesse sol mesurée ($V_{sol\_mes}$), fournie par un dispositif de mesure (24) équipant le drone (10), et
   - un module de calcul (46) configuré pour calculer une altitude ($Z_{sol\_est}$) du drone (10) par rapport au terrain (14), à partir de la vitesse sol mesurée acquise ($V_{sol\_mes}$) et d'un algorithme à flot optique appliqué aux images acquises,

   **caractérisé en ce que** le deuxième module d'acquisition (44) est configuré pour acquérir en outre une altitude du drone mesurée par rapport à un niveau de référence ($Z_{ref\_mes}$), et
   **en ce que** le dispositif comprend en outre un module de recalibrage (48) configuré pour corréler l'altitude calculée par rapport au terrain ($Z_{sol\_est}$) avec l'altitude mesurée par rapport au niveau de référence ($Z_{ref\_mes}$).

2. Dispositif électronique (16) selon la revendication 1, dans lequel le module de recalibrage (48) est configuré en outre pour estimer une altitude courante par rapport au terrain ($Z_{sol\_est}(N)$) à partir d'une altitude courante mesurée par rapport au niveau de référence ($Z_{ref\_mes}(N)$) et d'une précédente altitude calculée par rapport au terrain ($Z_{sol\_est}(N-1)$) qui a été corrélée avec une précédente altitude mesurée par rapport au niveau de référence ($Z_{ref\_mes}(N-1)$),
   de préférence en cas d'une défaillance au moins temporaire du calcul de l'altitude par rapport au terrain à partir de l'algorithme à flot optique.

3. Dispositif électronique (16) selon la revendication 1 ou 2, dans lequel le premier module d'acquisition (40) est en outre configuré pour calculer un premier indicateur (Ind1) en fonction d'un gradient d'image, le module de calcul (46) étant configuré pour calculer l'altitude du drone par rapport au terrain ($Z_{sol\_est}$) seulement lorsque la valeur du premier indicateur (Ind1) est supérieure à un premier seuil (S1).

4. Dispositif électronique (16) selon la revendication 3, dans lequel le module de recalibrage (48) configuré en outre pour calculer un deuxième indicateur (Ind2) inversement proportionnel au premier indicateur (Ind1) et pour corréler l'altitude calculée par rapport au terrain ($Z_{sol\_est}$) avec l'altitude mesurée par rapport au niveau de référence ($Z_{ref\_mes}$) seulement lorsque la valeur du deuxième indicateur (Ind2) est inférieure à un deuxième seuil (S2).

5. Dispositif électronique (16) selon l'une quelconque des revendications précédentes, dans lequel le niveau de référence est le niveau de la mer, et l'altitude mesurée par rapport au niveau de la mer est obtenue via un capteur de pression.

6. Dispositif électronique (16) selon l'une quelconque des revendications précédentes, dans lequel le deuxième module d'acquisition (44) est configuré pour acquérir en outre une altitude du drone mesurée par rapport au terrain ($Z_{sol\_mes}$),

et le dispositif (16) comprend en outre un module de commande (50) configuré pour commander une attitude du drone (10) en fonction d'une altitude ($Z_{sol\_mes}$, $Z_{sol\_est}$) du drone (10), le module de commande (50) étant configuré pour calculer des instructions de pilotage correspondant à ladite attitude.

7. Dispositif électronique (16) selon la revendication 6, dans lequel lorsque la valeur de l'altitude mesurée par rapport au terrain ($Z_{sol\_mes}$) est supérieure à une première altitude seuil prédéfinie (Z1), le module de commande (50) est configuré pour commander l'attitude du drone (10) en fonction de l'altitude mesurée par rapport au terrain ($Z_{sol\_mes}$), acquise par le deuxième module d'acquisition (44), et

lorsque la valeur de l'altitude mesurée par rapport au terrain ($Z_{sol\_mes}$) est inférieure à la première altitude seuil prédéfinie (Z1), le module de commande (50) est configuré pour commander l'attitude du drone (10) en fonction en outre de l'altitude par rapport au terrain ($Z_{sol\_est}$) calculée par le module de calcul (46).

8. Dispositif électronique (16) selon la revendication 6 ou 7, dans lequel lorsque la valeur de l'altitude mesurée par rapport au terrain ($Z_{sol\_mes}$) est inférieure à une deuxième altitude seuil prédéfinie (Z2), le module de commande (50) est configuré pour commander l'assiette du drone (10) à une valeur supérieure à une assiette minimale d'atterrissage prédéfinie.

9. Drone (10) comprenant un capteur d'images (12 ; 18) configuré pour prendre une succession d'images d'un terrain survolé par le drone (10) et un dispositif électronique de pilotage (16),
**caractérisé en ce que** le dispositif électronique de pilotage (16) est selon l'une quelconque des revendications précédentes.

10. Procédé de pilotage d'un drone (10) comportant un capteur d'images (12 ; 18), le procédé étant mis en oeuvre par un dispositif électronique (16) et comprenant :

- l'acquisition (100) d'une succession d'images, prises par le capteur d'images (12 ; 18), d'un terrain (14) survolé par le drone (10),
- l'acquisition (120) d'une vitesse sol mesurée ($V_{sol\_mes}$), fournie par un dispositif de mesure (24) équipant le drone (10), et
- le calcul (130) d'une altitude ($Z_{sol\_est}$) du drone (10) par rapport au terrain (14), à partir de la vitesse sol mesurée acquise ($V_{sol\_mes}$) et d'un algorithme à flot optique appliqué aux images acquises,

**caractérisé en ce qu'**il comprend en outre :

- l'acquisition (150) d'une altitude du drone mesurée par rapport à un niveau de référence ($Z_{ref\_mes}$), et
- la corrélation (160) de l'altitude calculée par rapport au terrain ($Z_{sol\_est}$) avec l'altitude mesurée par rapport au niveau de référence ($Z_{ref\_mes}$).

11. Programme d'ordinateur comportant des instructions logicielles qui, lorsqu'elles sont exécutées par un ordinateur, mettent en oeuvre un procédé selon la revendication précédente.

FIG.1

Acquisition de la vitesse sol
mesurée du drone

Acquisition d'images successives du
terrain survolé par le drone

120

100

Test vs
1er seuil
positif ?

NON

110

OUI

Acquisition de l'altitude du drone
mesurée par rapport à
un niveau de référence

Calcul de l'altitude du drone
par rapport au terrain, via un
algorithme à flot optique

150

130

Test vs
2ème seuil
positif ?

NON

140

OUI

Acquisition de l'altitude du drone
mesurée par rapport au terrain

Recalibrage avec corrélation entre
l'altitude calculée par rapport au terrain
et l'altitude mesurée par rapport au
niveau de référence

170

160

180

Commande de l'attitude du drone

## FIG.2

Europäisches
Patentamt

European
Patent Office

Office européen
des brevets

**RAPPORT DE RECHERCHE EUROPEENNE**

Numéro de la demande

EP 17 20 5895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FARID KENDOUL ET AL: "An adaptive vision-based autopilot for mini flying machines guidance, navigation and control", AUTONOMOUS ROBOTS, KLUWER ACADEMIC PUBLISHERS, BO, vol. 27, no. 3, 21 août 2009 (2009-08-21), pages 165-188, XP019746135, ISSN: 1573-7527, DOI: 10.1007/S10514-009-9135-X | 1-6,8-11 | INV. G01C5/06 G01C21/00 G06T7/20 G05D1/06 G01C21/16 |
| Y | * le document en entier * ----- | 7 | |
| Y | FARID KENDOUL: "Survey of advances in guidance, navigation, and control of unmanned rotorcraft systems", JOURNAL OF FIELD ROBOTICS, vol. 29, no. 2, 18 janvier 2012 (2012-01-18), pages 315-378, XP055348364, US ISSN: 1556-4959, DOI: 10.1002/rob.20414 * page 334, colonne 1, alinéa 4 - page 343, colonne 2, alinéa 1 * ----- | 7 | |
| A | EP 3 076 258 A1 (PARROT DRONES [FR]) 5 octobre 2016 (2016-10-05) * le document en entier * ----- | 1-11 | DOMAINES TECHNIQUES RECHERCHES (IPC) G01C G06T G05D |

Le présent rapport a été établi pour toutes les revendications

| Lieu de la recherche | Date d'achèvement de la recherche | Examinateur |
|---|---|---|
| La Haye | 12 avril 2018 | Philipp, Martine |

**ANNEXE AU RAPPORT DE RECHERCHE EUROPEENNE
RELATIF A LA DEMANDE DE BREVET EUROPEEN NO.**

EP 17 20 5895

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-04-2018

| Document brevet cité au rapport de recherche | | Date de publication | Membre(s) de la famille de brevet(s) | | Date de publication |
|---|---|---|---|---|---|
| EP 3076258 | A1 | 05-10-2016 | CN | 106053874 A | 26-10-2016 |
| | | | EP | 3076258 A1 | 05-10-2016 |
| | | | FR | 3034554 A1 | 07-10-2016 |
| | | | JP | 2016193720 A | 17-11-2016 |
| | | | US | 2016290809 A1 | 06-10-2016 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2400460 A1

**Littérature non-brevet citée dans la description**

- **DE BRIOD.** *Optic-Flow Based Control of a 46g Quad-rotor*
- **DE JULIN.** *Optical Flow Based Velocity Estimation for Vision based Navigation of Aircraft*
- **DE HO.** *Distance and velocity estimation using optical flow from a monocular camera*